**Europäisches Patentamt**

**European Patent Office**

**Office européen des brevets**

(19)

(11) Veröffentlichungsnummer : **0 418 350 B1**

(12) **EUROPÄISCHE PATENTSCHRIFT**

(45) Veröffentlichungstag der Patentschrift :
20.10.93 Patentblatt 93/42

(51) Int. Cl.$^5$ : **H02J 7/16, H02P 9/30**

(21) Anmeldenummer : **90904759.9**

(22) Anmeldetag : **23.03.90**

(86) Internationale Anmeldenummer :
**PCT/DE90/00236**

(87) Internationale Veröffentlichungsnummer :
**WO 90/12443 18.10.90 Gazette 90/24**

(54) **SPANNUNGSREGLER.**

(30) Priorität : **01.04.89 DE 3910509**
**01.03.90 DE 4006387**

(43) Veröffentlichungstag der Anmeldung :
**27.03.91 Patentblatt 91/13**

(45) Bekanntmachung des Hinweises auf die
Patenterteilung :
**20.10.93 Patentblatt 93/42**

(84) Benannte Vertragsstaaten :
**DE ES FR GB IT**

(56) Entgegenhaltungen :
**WO-A-88/01110**
**US-A- 4 486 702**

(73) Patentinhaber : **ROBERT BOSCH GMBH**
**Postfach 30 02 20**
**D-70442 Stuttgart (DE)**

(72) Erfinder : **CONZELMANN, Gerhard**
**Wilhelmstrasse 37**
**D-7022 Leinfelden-Oberaichen (DE)**
Erfinder : **KOHL, Walter**
**Monreposstrasse 17**
**D-7120 Bietigheim (DE)**
Erfinder : **NAGEL, Karl**
**Grundstrasse 24**
**D-7413 Gomaringen (DE)**

## Beschreibung

### Stand der Technik

Die Erfindung betrifft einen Spannungsregler nach der Gattung des Hauptanspruchs.

Spannungsregler für Drehstromgeneratoren sollen möglichst für alle Generatorgrößen brauchbar sein. Dies erfordert weitergehende Korrekturen ihrer Kennlinien als bisher. Da digitale Rglerkonzepte, die mittels einer "Kennfeldregelung" beliebige Reglerkennlinien ermöglichen, nicht nur aufwendig sind, sondern auch mindestens einen Stützkondensator benötigen, also direkt an die Generatorklemmen anschließbar sein sollen, gilt es, die analogen Regler mittels einer integralen Komponente weiter zu verbessern.

Regler mit einer integralen Komponente zur Korrektur ihrer Kennlinien sind rein proportional arbeitenden Reglern überlegen. In der US-PS 4 661 760 ist ein Regler mit einer integralen Komponente, die mittels eines Meßwiderstands im Laststromkreis erzeugt ist, beschrieben. Dies ist wegen des Meßwiderstands für hohe Ströme und den erforderlichen Zuleitungen eine sehr aufwendige Lösung.

Die in der US-PS 4 555 657 und ebenso die in der US-PS 4 590 414 beschriebene Lösung kommt dagegen ohne den teuren Meßwiderstand aus durch eine Abfrage der relativen Einschaltdauer des Erregerstroms als einer am Regler selbst vorhandenen Ersatzgröße.

Des weiteren ist aus der WO 88/01110 ein Regler mit einer nichtlinearen integralen Komponente bekannt.

### Vorteile der Erfindung

Der erfindungsgemäße Spannungsregler mit den kennzeichnenden Merkmalen des Hauptanspruchs hat demgegenüber den Vorteil, daß er bei hinreichender Wirkung einerseits extrem einfach ist und daß sich mit ihm andererseits mit einem mäßigen Aufwand an Schaltmitteln - eine richtige Auslegung vorausgesetzt - gute Korrekturen der Abweichungen der Reglerkennlinie über Drehzahl und Last vom idealen Verlauf erreichen lassen.

Um die erforderlichen Korrekturfunktionen K darzustellen, also Ströme und/oder Spannungen, die unter Berücksichtigung ihrer Phasenlage an geeigneten Stellen auf der Istwert- oder Referenzseite der Regelstrecke einzukoppeln sind, gibt es verschiedene Möglichkeiten:

So läßt sich eine unterschiedliche Bewertung des Erregerstroms während des Stromflusses in den beiden Teilperioden zur Bildung der Korrekturfunktion dadurch darstellen, daß dem im Erregerstromkreis liegenden Meßwiderstand mittels einer synchron zum Takt des Spannungsreglers steuerbaren Schaltung während des Stromflusses durch das Erregerfeld und den gesteuerten Halbleiterschalter ein anderer Widerstandswert zugemessen ist als während des Stromflusses durch das Errregerfeld und die Freilaufdiode, oder aber vorteilhafter dadurch, daß der an dem im Erregerfeld liegenden Meßwiderstand zum Erfassen des Feldstroms abgegriffenen Signalspannung mittels einer synchron zum Takt des Spannungsreglers steuerbaren Schaltung zur Spannungsteilung oder Stromteilung während des Stromflusses durch das Erregerfeld und den gesteuerten Halbleiterschalter ein anderer Ausgangswert zugeordnet ist als während des Stromflusses durch das Erregerfeld und die Freilaufdiode.

Der Meßwiderstand im Erregerstromkreis ist eine extra Komponente der Schaltung. Bei monolithisch integrierten Reglern lassen sich dagegen vorteilhaft je ein Meßwiderstand im Kollektorstromkreis des gesteuerten Halbleiterschalters und im Stromkreis der Freilaufdiode einsetzen, da weitgehend bereits vorhandene Leitungsstücke, wie etwa der Belag der Metallisierung eines Kollektor- oder Emitterfingers bzw. des Anoden- oder Kathodenfingers einer Zelle, dafür geeignet sind. Die Meßwiderstände können dabei gleiche oder unterschiedliche Widerstandswerte aufweisen. Die einfachste Lösung sieht vor, den Fußpunkt der Referenzspannung nicht an Masse, sondern an das "heiße" Ende eines Emitterwiderstands anzuschließen, wodurch sich, wie später noch gezeigt werden wird, eine Korrekturfunktion $y = ax^2$ ergibt, also ein Anheben des Istwerts vor allem im Bereich großer Ströme.

Selbstverständlich kann die vorgeschlagene nichtlineare Korrekturfunktion K auch mit einem Kondensator dargestellt werden, dessen Ladestrom verschieden ist von seinem Entladestrom bezogen jeweils auf den Momentanwert seiner Spannung.

### Zeichnung

Anhand der Zeichnung wird die Erfindung näher erläutert.

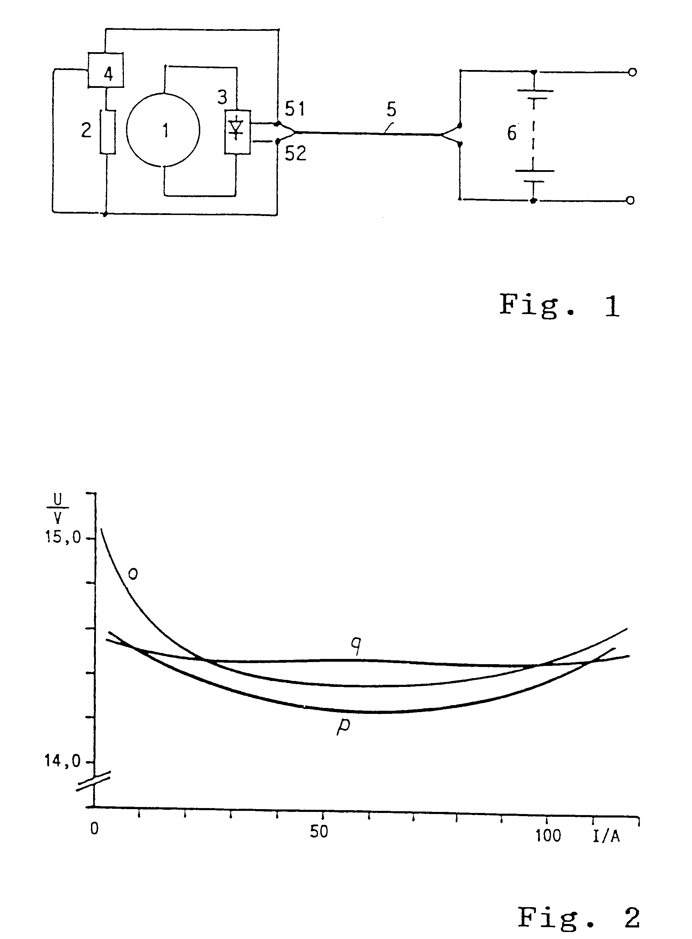

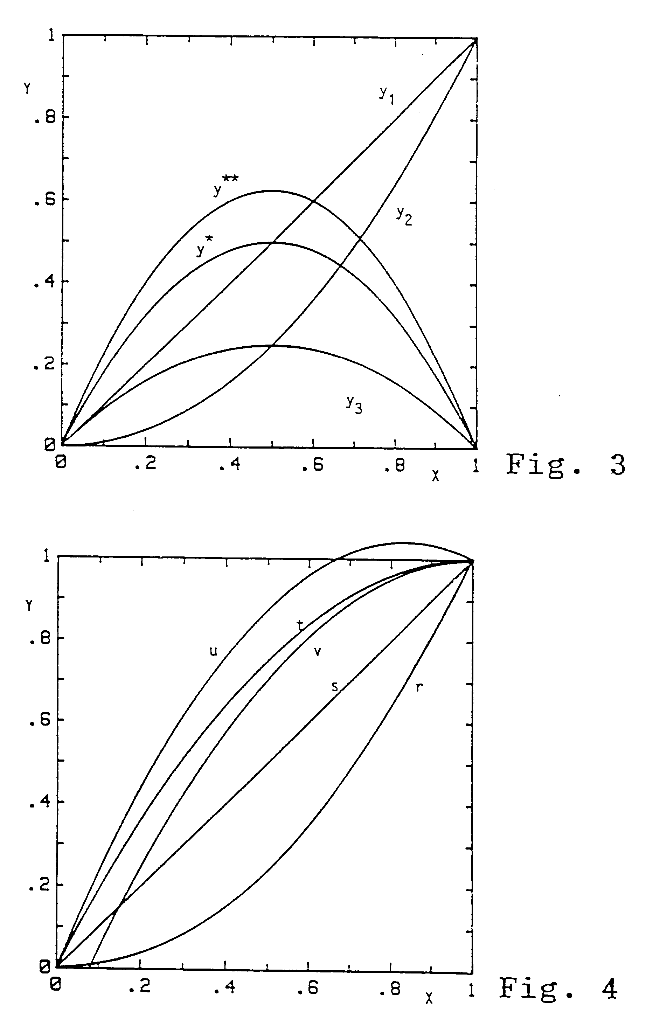

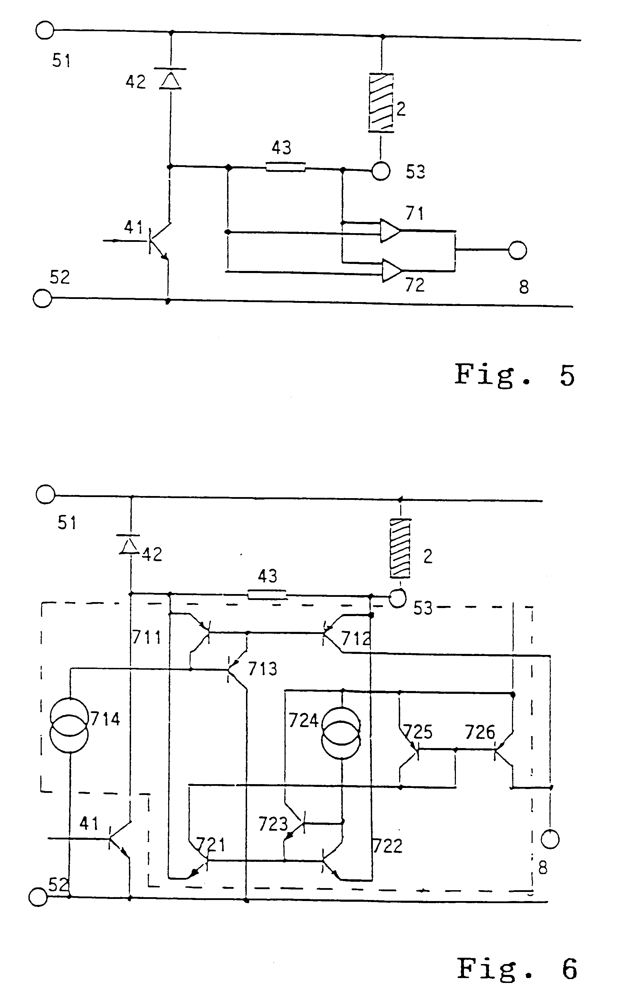

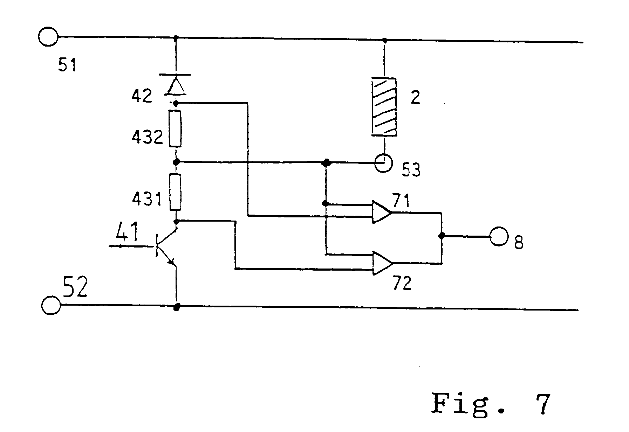

In Figur 1 ist die Blockschaltung eines Bordnetzes mit Generator, Gleichrichter, Spannungsregler und Batterie wiedergegeben. Figur 2 zeigt den Spannungsverlauf als Funktion des Generatorstroms eines Generators, der mit drei verschiedenen Spannungsreglern betrieben ist, und zwar mit einem, der eine nur rein linear arbeitende integrale Komponente aufweist, einem mit einer Korrekturfunktion K nach der WO 88/01110 und einem weiteren mit einer erheblich verbesserten Korrekturfunktion K gemäß der Erfindung. In Figur 3 sind Möglichkeiten aufgezeigt, die sich durch unterschiedliche Bewertung der beiden Teilperioden gemäß der Erfindung ergeben und aus denen sich beispielhaft die verschiedenen Korrekturfunktionen K der Figur 4 bilden lassen. In Figur 5 ist die Blockschaltung zur Bildung einer Korrekturfunktion K gemäß der Erfindung mit einem Meßwiderstand im Erregerstromkreis und zwei Operationsverstärkern mit unterschiedlichem Stromwandlerverhältnis dargestellt; Figur 6 zeigt beispielhaft eine Schaltung dazu, Figur 7 gibt eine Anordnung wieder mit je einem Meßwiderstand im Kollektorkreis des Transistors und im Anodenkreis der Freilaufdiode.

Beschreibung der Erfindung

In Figur 1 ist 1 der Generator mit der Erregerwicklung 2, dem Gleichrichter 3 und dem Spannungsregler 4; seine positive Klemme ist mit 51, seine negative mit 52 bezeichnet. Die Zuleitung 5 verbindet den Generator 1 mit der Batterie 6. Der Spannungsregler 4 ist mit den Klemmen 51, 52 verbunden; der Istwert der Generatorspannung wird somit am Generator selbst abgegriffen. In der Darstellung des Spannungsverlaufs als Funktion des Generatorstroms für einen Generator mit 120 A Nennstrom, Figur 2, ist mit o die Kennlinie eines Spannungsreglers mit einer rein linear wirkenden integralen Korrekturfunktion, mit p die Kennlinie eines einfach nichtlinearen Spannungsreglers und mit q die eines Spannungsreglers mit einer erweiterten Korrekturfunktion bezeichnet.

Mit der linear arbeitenden Korrekturfunktion o fällt der Istwert der Generatorspannung vom Strom Null aus bis etwa zur Hälfte des Generatorstroms um 700 mV ab, um danach wieder bis zum Maximalwert des Stroms um 300 mV anzusteigen. Wird nunmehr der Anfangsteil der linearen Korrekturfunktion ausgespart, also zu einer nichtlinearen Korrektur übergegangen, so ergibt sich mit dem Spannungsverlauf p eine deutliche Verbesserung; der Istwert der Generatorspannung verläuft jetzt in etwa symmetrisch zum Strom, er weicht nur noch um etwa -300 mV von den Maximalwerten an den beiden Endpunkten ab. Soll dieser Verlauf verbessert werden, so ist eine Korrekturfunktion höherer Ordnung erforderlich wie bei q, wo die maximale Abweichung nur noch ca. 80 mV absolut beträgt.

Die Darstellung solcher Korrekturfunktionen sei anhand der Figuren 3 und 4 erläutert. Abszisse x und Ordinate y sind mit normierten Maßstäben versehen; ist $I_e$ der Istwert des Erregerstroms und $I_m$ sein Maximalwert bei stets eingeschaltetem Halbleiterschalter des Spannungsreglers, so ist

$$x = I_e/I_m$$

die relative Einschaltdauer des Erregerstroms und y die auf 1 normierte Ausgangsgröße des entsprechenden Schaltungsteils, mittels dessen sie gewonnen ist, bei einem OTA (Operational Transconductans Amplifier) also ein Strom bzw. an einem Meßwiderstand eine Spannung; x läßt sich aber auch ohne Meßwiderstand mittels eines fremden Integrators, etwa einem RC-Glied, direkt aus der Kollektorspannung des Halbleiterschalters gewinnen.

Der Verlauf y(x) ist mit einem Meßwiderstand im Erregerstromkreis eine Gerade $y_1 = x$ (Figur 3); wird der Meßwiderstand in den Stromkreis des Halbleiterschalters gelegt, so ist $y_2 = x^2$ eine Parabel mit horizontaler Tangente im Nullpunkt. Mit einem Meßwiderstand im Stromkreis der Freilaufdiode ergibt sich die Funktion $y_3 = x - x^2$. also ebenfalls eine Parabel mit horizontaler Tangente im Maximum bei x = 0,5. Werden die beiden Funktionen $y_2$ und $y_3$ addiert, so ergibt sich $y_4$, also

$$y_4 = y_2 + y_3 = x^2 + (x - x^2) = x, \text{ qed;}$$

Die Korrekturfunktion y = x, die ein Meßwiderstand im Erregerstromkreis liefert, kann somit auch mittels zweier Meßwiderstände im Kollektorkreis des Halbleiterschalters und im Anodenkreis der Freilaufdiode gewonnen werden, wenn beide Größen etwa mittels zweier Operationsverstärker mit gleichem Übersetzungsverhältnis addiert werden. Durch unterschiedliche Übersetzungsverhältnisse läßt sich nun leicht eine Vielzahl der verschiedensten Funktionen $y_4(x)$ als Korrekturfunktion für den Istwert der Generatorspannung gewinnen, wie etwa $y_3 = a(x - x^2)$ mit a=2,0 als y* und y** mit a=2,5 in Figur 3.

Einige Möglichkeiten dazu sind in Figur 4 wiedergegeben. Allgemein ist mit mit Proportionalitätsfaktoren versehenen Teilfunktionen und einer additiven Konstanten

$$y_4 = a(x - x^2) + bx^2 + c.$$

Mit a=0 und b=1 ist $y_4 = x^2$, wiedergegeben durch r; s entspricht y=x und die Funktion $y_4 = 2(x - x^2) + x^2$ dem Verlauf t; wird a=2,5 gewählt, ergibt sich u, das größer als 1 wird. Fügt man für a=2 die Konstante c=-0,15 hinzu, so ergibt sich v, das unter Null beginnt. Liefert beispielsweise der Ausgang des verwendeten OTAs keine Ströme i<O, so wird dieser Ast unterdrückt: ebenso läßt sich u bei $y_4 = 1$ abschneiden, wenn sein Maximalstrom zu normiert "1" festgelegt ist.

Mittels der Konstanten a, b und c und entsprechend festgelegter Aussteuerbereiche der verwendeten Verstärker lassen sich leicht nahezu beliebige Korrekturfunktionen darstellen. So ist der Spannungsverlauf q von Bild 2 mit einer Korrekturfunktion K mit etwa den Konstanten a=2, b=1 und c=0,15, entsprechend dem Verlauf v in Figur 4, erreicht worden. Noch bessere Korrekturen durch weitergehende Ausgestaltung der Korrekturfunktion K mittels der beschriebenen Mittel sind nur wenig sinnvoll, ebenso gezielte weitere Korrekturen etwa mittels des Temperaturgangs, sofern der Temperaturgang des Spannungsreglers auch in Ordnung ist, also der vorgegebenen Temperaturfunktion entspricht.

In Figur 5 ist 2 wieder das Erregerfeld des Generators; mit 41 ist der Halbleiterschalter des Spannungsreglers, ein NPN-Transistor, und mit 42 seine Freilaufdiode bezeichnet: 43 ist der Meßwiderstand im Erregerstromkreis zum Erfassen des Erregerstroms entsprechend dem integralen Wert der relativen Einschaltdauer. Die beiden Operationsverstärker 71 und 72 (OTAs) liegen mit ihren Eingängen parallel am Meßwiderstand 43, ihre Ausgänge sind ebenfalls prallelgeschaltet an die Klemme 8 angeschlossen, an der die Korrekturfunktion abgenommen ist. Ebenfalls erforderliche Mittel zum Einstellen der Arbeitspunkte, der Aussteuerbereiche, der Konstanten a und c (b=1) sind dem Fachmann bekannt und deshalb weggelassen worden. Von den beiden Verstärkern soll z. B. der Verstärker 71 während des Stromflusses durch die Freilaufdiode 42 und der Verstärker 72 während des Stromflusses durch den Transistor 41 wirksam sein. Dies erfordert ein Umschalten der Verstärker im Takt der Frequenz des Reglers. Der Operationsverstärker 71 ist durch die PNP-Transistoren 711, 712, 713 und die Stromquelle 714 gebildet. Entsprechend bilden die NPN-Transistoren 721, 722, 723 mit der Stromquelle 724 den Operationsverstärker 72, dessen Ausgangsstrom, nochmals mittels des Stromspiegels 725, 726 gespiegelt und dann vereint mit dem Ausgangsstrom des Verstärkers 71, die an der Klemme 8 anstehende Korrekturfunktion K darstellt. Die am Meßwiderstand abfallende Signalspannung ist jeweils in die Emitter der Differenztransistoren 711, 712 bzw. 721, 722 eingekoppelt. Fließt der Erregerstrom durch die Freilaufdiode 42, so ist der Transistor 41 ausgeschaltet. Das Potential der Anschlußklemme 53 der Feldwicklung ist hoch, der Operationsverstärker 71 erhält Betriebsspannung und arbeitet in der ihm zugedachten Teilperiode. Die Transistoren des Operationsverstärkers 72 sind während dieser Zeit gesperrt.

Fließt der Erregerstrom nach dem Einschalten des Transistors 41 durch diesen, so ist sein Kollektor-Emitterpotential klein und damit auch das Potential der Anschlußklemme 53. Jetzt erhalten die Transistoren 721, 722, ... Betriebsspannung, der Operationsverstärker 72 arbeitet.

In Figur 7 ist noch gezeigt, wie das Blockschaltbild mit zwei Meßwiderständen 431, 432 jeweils im Erregerstromkreis der Freilaufdiode 42 bzw. des Transistors 41 anstelle des gemeinsamen Meßwiderstands 43 aussieht. Diese Lösung ist dann besonders vorteilhaft, wenn sich die Widerstände, wie schon früher beschrieben, mittels bereits im Layout vorhandener Leitungsstücke ausführen lassen: in diesem Fall sind ihre Widerstandswerte eventuell verschieden, so das ihr Widerstandsverhältnis für das gewünschte Transformationsverhältnis der beiden Operationsverstärker (n) zu berücksichtigen ist.

Die Erfindung erlaubt es besonders einfach, bei monolithisch integrierten Spannungsreglern durch Korrekturen höherer Ordnung den Verlauf des Istwerts der Generatorspannung als Funktion des Generatorstroms vor allem bei Einbaureglern mit einer Spannungsabfrage an den Generatorklemmen einzuebnen. Wie gezeigt wurde, läßt sich auch bei stromstarken Generatoren der Restfehler auf Werte unter 100 mV drücken.

## Patentansprüche

1. Spannungsregler (4) für Generatoren, insbesondere für den Einsatz in Kraftfahrzeugen, der durch Ein- und Ausschalten des Feldstroms mittels eines gesteuerten Halbleiterschalters (41) im Zusammenwirken mit einem Freilaufkreis einen mittleren Feldstrom im Erregerfeld des Generators (1) erzeugt, derart, daß die Generatorspannung unabhängig von der Last und der Drehzahl in etwa konstant bleibt, und mit einer integral wirkenden Komponente zur Kompensation last- und drehzahlabhängiger Fehler, die mittels eines nichtlinear arbeitenden Integrators (43,71,72) aus der relativen Einschaltdauer des Stroms durch die Erregerwicklung erzeugt und in den Regelkreis des Spannungsreglers zurückgeführt ist, dadurch gekennzeichnet, daß die Nichtlinearität der Ausgangsgröße des Integrators dadurch erzeugt ist, daß zur Bildung der Korrekturfunktion (K) der eine Periodenteil während des Stromflusses durch die Erregerwicklung (2) des Generators und den gesteuerten Halbleiterschalter (41) anders bewertet ist als der andere Periodenteil während des Stromflusses durch die Erregerwicklung und die Freilaufdiode (42).

2. Spannungsregler nach Anspruch 1 mit einem durch die Induktivität des Erregerfelds gebildeten Integrator in Verbindung mit einem Meßwiderstand (431) im Erregerstromkreis zum Erfassen des mittleren Erregerstroms als Ausgansgröße des Integrators in Form einer Signalspannung, dadurch gekennzeichnet, daß zur Bildung der Korrekturfunction (K) dem im Erregerstromkreis liegenden Meßwiderstand (431) mittels einer synchron zum Takt des Spannungsreglers steuerbaren Schaltung während des Stromflusses durch das Erregerfeld und den gesteuerten Halbleiterschalter (41) ein anderer Widerstandswert zugemessen ist als während des Stromflusses durch das Erregerfeld und die Freilaufdiode.

3. Spannungsregler nach Anspruch 2 mit einem konstanten Meßwiderstand (431) im Erregerstromkreis, dadurch gekennzeichnet, daß zur Bildung der Korrekturfunktion (K) der an dem im Erregerfeld liegenden Meßwiderstand (431) zum Erfassen des Feldstroms abgegriffenen Signalspannung mittels einer synchron zum Takt des Spannungsreglers steuerbaren Schaltung zur Spannungsteilung oder Stromteilung während des Stromflusses durch das Erregerfeld und den gesteuerten Halbleiterschalter (41) ein anderer Ausgangswert zugeordnet ist als während des Stromflusses durch das Erregerfeld und die Freilaufdiode (42) (Figur 3).

4. Spannungsregler nach Anspruch 1, dadurch gekennzeichnet, daß zur Bildung der Korrekturfunktion (K) je ein Meßwiderstand (431, 432) im Stromkreis des gesteuerten Halbleiterschalters (41) und im Stromkreis der Freilaufdiode (42) angeordnet ist (Figur 7).

5. Spannungsregler nach Anspruch 4, dadurch gekennzeichnet, daß zur Bildung der Korrekturfunction (K) je ein Meßwiderstand (431,432) im Kollektorstromkreis des gesteuerten Halbleiterschalters (41) und im Stromkreis der Freilaufdiode (42) angeordnet ist.

6. Spannungsregler nach Anspruch 4, dadurch gekennzeichnet, daß zur Bildung der Korrekturfunktion (K) je ein Meßwiderstand im Emitterstromkreis des gesteuerten Halbleiterschalters (41) und im Stromkreis der Freilaufdiode (42) angeordnet ist.

7. Spannungsregler nach einem der Ansprüche 4 bis 6, dadurch gekennzeichnet, daß zur Bildung der Korrekturfunktion (K) je ein Meßwiderstand (431,432) im Stromkreis des gesteuerten Halbleiterschalters (41) und im Stromkreis der Freilaufdiode (42) angeordnet ist und daß die beiden Meßwiderstände unterschiedliche Widerstandwerte aufweisen.

8. Spannungsregler nach Anspruch 6 oder 7, dadurch gekennzeichnet, daß zur Bildung der Korrekturfunktion (K) ein Emitterwiderstand vorgesehen ist und daß der Fußpunkt der Referenzspannungsquelle am heißen Ende des Emitterwiderstands direkt oder über einen Operationsverstärker angeschlossen ist.

9. Spannungsregler nach einem der Ansprüche 4 bis 7, dadurch gekennzeichnet, daß zur Bildung der Korrekturfunktion (K) mindestens einem der beiden Meßwiderstände ein Spannungsteiler oder Stromteiler bzw. ein entsprechend wirkender Operationsverstärker (71,72) nachgeschaltet ist.

10. Spannungsregler nach Anspruch 1 mit einem Kondensator als Integrator, dadurch gekennzeichnet, daß bezogen auf den gleichen Momentanwert der Kondensatorspannung zur Bildung der Korrekturfunktion (K) sein Ladestrom verschieden ist von seinem Entladestrom.

11. Spannungsregler nach einem der vorhergehenden Ansprüche, dadurch gekennzeichnet, daß die Korrekturfunktion (K) bezogen auf den Istwert der Regelspannung des Spannungsreglers durch den während des Stromflusses durch das Erregerfeld und die Freilaufdiode (42) fließenden Strom stärker angehoben ist als während des Stromflusses durch das Erregerfeld und den gesteuerten Halbleiterschalter (41).

12. Spannungsregler nach Anspruch 9, dadurch gekennzeichnet, daß die Korrekturfunktion (K) bezogen auf den Istwert der Regelspannung des Spannungsreglers durch den während des Stromflusses durch das Erregerfeld und die Freilaufdiode (42) fließenden Strom um einen Faktor zwischen $1 < F \leqq 2,5$ stärker angehoben ist als während des Stromflusses durch das Erregerfeld und den gesteuerten Halbleiterschalter (41).

13. Spannungsregler nach einem der vorhergehenden Ansprüche, dadurch gekennzeichnt, daß mindestens einer der beiden Terme der Korrekturfunktion (K) von einem größeren Wert der relativen Einschaltdauer als "Null" aus ansteigt (Figur 4v).

14. Spannungsregler nach einem der vorhergehenden Ansprüche, dadurch gekennzeichnet, daß mindestens einer der beiden Terme der Korrekturfunktion (K) durch den Aussteuerbereich des nachgeschalteten Operationsverstärkers (71,72) begrenzt ist (Figur 4u, v).

## Claims

1. Voltage controller (4) for generators, in particular for use in motor vehicles, which creates a mean field current in the excitation field of the generator (1) by switching the field current on and off by means of a controlled semiconductor switch (41) in conjunction with a free-wheeling circuit in such a way that the generator voltage remains approximately constant regardless of the load and the speed, and which has an integral-action component to compensate for load- and speed-dependent errors, which compensation is created by means of a nonlinear-action integrator (43; 71; 72) from the duty ratio of the current through the excitation winding and is fed back into the control circuit of the voltage controller, characterised in that the non-linearity of the output parameter of the integrator is created by evaluating the one period section during the flow of the current through the excitation winding (2) of the generator and the controlled semiconductor switch (41) in a different way from the other period section during the flow of the current through the excitation winding and the free-wheeling diode (42) to derive the correction function (K).

2. Voltage controller according to Claim 1, having an integrator formed by the inductance of the excitation field in conjunction with a measuring resistor (431) in the excitation circuit to determine the mean field current as output parameter of the integrator in the form of a signal voltage, characterised in that, to derive the correction function (K), there is allotted, by means of a circuit which can be controlled synchronously with the phase of the voltage controller, a resistance value to the measuring resistor (431), situated in the excitation circuit, during the current flow through the excitation field and the controlled semiconductor switch (41), which resistance value is different from that during the current flow through the excitation field and the free-wheeling diode.

3. Voltage controller according to Claim 2, having a constant measuring resistor (431) in the excitation circuit, characterised in that, to derive the correction function (K), there is assigned, by means of a voltage-division or current-division circuit which can be controlled synchronously with the phase of the voltage controller, an output value to the signal voltage taken off from the measuring resistor, situated in the excitation field for determining the field current, during the current flow through the excitation field and the controlled semiconductor switch (41), which output value is different from that during the current flow through the excitation field and the free-wheeling diode (42) (Figure 3).

4. Voltage controller according to Claim 1, characterised in that, to derive the correction function (K) one measuring resistor (431, 432) in each case is disposed in the circuit of the controlled semiconductor switch (41) and in the free-wheeling diode (42) circuit (Figure 7).

5. Voltage controller according to Claim 4, characterised in that, to derive the correction function (K), one measuring resistor (431, 432) in each case is disposed in the collector circuit of the controlled semiconductor switch (41) and in the free-wheeling diode (42) circuit.

6. Voltage controller according to Claim 4, characterised in that, to derive the correction function (K), one measuring resistor in each case is disposed in the emitter circuit of the controlled semiconductor switch (41) and in the free-wheeling diode (42) circuit.

7. Voltage controller according to one of Claims 4 to 6, characterised in that, to derive the correction function (K), one measuring resistor (431, 432) in each case is disposed in the circuit of the controlled semiconductor switch (41) and in the free-wheeling diode (42) circuit, and in that the two measuring resistors have different resistance values.

8. Voltage controller according to Claim 6 or 7, characterised in that, to derive the correction function (K), an emitter resistor is provided, and in that the bottom end of the reference voltage source is connected to the hot end of the emitter resistor directly or via an operational amplifier.

9. Voltage controller according to one of Claims 4 to 7, characterised in that, to derive the correction function (K), a voltage divider or current divider, or a correspondingly acting operational amplifier (71, 72) is connected downstream of at least one of the two measuring resistors.

10. Voltage controller according to Claim 1 having a capacitor as integrator, characterised in that, referred to the same instantaneous value of the capacitor voltage for deriving the correction function (K), its charging current is different from its discharging current.

11. Voltage controller according to one of the preceding claims, characterised in that the correction function (K), referred to the actual value of the control voltage of the voltage controller, is increased by the current flowing during the current flow through the excitation field and the free-wheeling diode (42) more strongly than during the current flow through the excitation field and the controlled semiconductor switch (41).

12. Voltage controller according to Claim 9, characterised in that the correction function (K), referred to the actual value of the control voltage of the voltage controller, is increased by the current flowing during the current flow through the excitation field and the free-wheeling diode (42) by a factor of between $1 < F \leqq 2.5$ more strongly than during the current flow through the excitation field and the controlled semiconductor switch (41).

13. Voltage controller according to one of the preceding claims, characterised in that at least one of the two terms of the correction function (K) increases from a larger value of the duty ratio than "zero" (Figure 4v).

14. Voltage controller according to one of the preceding claims, characterised in that at least one of the two terms of the correction function (K) is limited by the control range of the downstream operational amplifier (71, 72) (Figure 4u, v).

**Revendications**

1. Régulateur de tension (4) pour des générateurs notamment destinés à des véhicules automobiles et qui, par branchement et coupure du courant de champ à l'aide d'un commutateur à semiconducteur commandé (41), dans leur coopération avec un circuit de roue libre par un courant de champ moyen dans le champ d'excitation du générateur (1) de façon que la tension du générateur reste constante indépendamment de la charge et de la vitesse de rotation et que sa composante à effet intégral serve à la compensation des erreurs dépendant de la charge et de la vitesse de rotation et qui est générée par un intégrateur à fonctionnement non linéaire (43, 71, 72) à partir du temps de branchement relatif du courant à travers l'enroulement d'excitation et est reconduit au circuit de régulation du régulateur de tension, régulateur de tension caractérisé en ce que l'on génère la non linéarité des grandeurs de sortie de l'intégrateur en ce que pour former la fonction de correction (K) on exploite différemment une partie de la période pendant le passage du courant à travers l'enroulement d'excitation (2) du générateur et le commutateur à semi-conducteur commandé (41) autrement que pour l'autre partie de période pendant le passage du courant à travers l'enroulement d'excitation et la diode de roue libre (42).

2. Régulateur de tension selon la revendication 1 avec un intégrateur formé par l'inductance du champ d'excitation en liaison avec une résistance de mesure (431) placée dans le circuit du courant d'excitation pour détecter le courant d'excitation moyen comme grandeur de sortie de l'intégrateur en forme de tension de signal, caractérisé en ce que pour former la fonction de correction (K) on associe à la résistance de mesure (431) placée dans le circuit du courant d'excitation, à l'aide d'un circuit commandé en synchronisme avec la cadence du régulateur de tension, pendant le passage du courant dans le champ d'excitation et le commutateur à semi-conducteur commandé 41, une autre valeur de résistance que pendant le passage du courant à travers le champ d'excitation et la diode de roue libre.

3. Régulateur de tension selon la revendication 2, comportant une résistance de mesure (431) constante dans le circuit du courant d'excitation, régulateur caractérisé en ce que pour former la fonction de correction (K) on associe à la résistance de mesure (431) placée dans le champ d'excitation pour détecter la tension du signal donnant le courant de champ, à l'aide d'un circuit commandé en synchronisme avec la cadence du régulateur de tension, pour diviser la tension ou diviser le courant pendant le passage du courant à travers le champ d'excitation et le semiconducteur commandé (41), une autre valeur de sortie que pendant le passage du courant à travers le champ d'excitation et la diode de roue libre (42) (figure 3).

4. Régulateur de tension selon la revendication 1, caractérisé en ce que pour former la fonction de correction (K) on prévoit chaque fois une résistance de mesure (431, 432) dans le circuit du courant du commutateur à semi-conducteur commandé (41) et dans le circuit de courant de la diode à roue libre (42) (figure 7).

5. Régulateur de tension selon la revendication 4, caractérisé en ce que pour former la fonction de correction (K) on prévoit chaque fois une résistance de mesure (431, 432) dans le chemin de courant du collecteur du commutateur à semi-conducteur commandé (41) et dans le circuit de courant de la diode de roue libre (42).

6. Régulateur de tension selon la revendication 4, caractérisé en ce que pour former la fonction de correction (K) on prévoit chaque fois une résistance de mesure dans le circuit du courant d'émetteur du commutateur à semi-conducteur commandé (41) et dans le circuit de courant de la diode de roue libre (42).

7. Régulateur de tension selon l'une des revendications 4 à 6, caractérisé en ce que pour former la fonction de correction (K) on prévoit chaque fois une résistance de mesure (431, 432) dans le circuit de courant du commutateur à semi-conducteur commandé (41) et dans le circuit de courant de la diode à roue libre (42) et en ce que les deux résistances de mesure ont des valeurs différentes.

8. Régulateur de tension selon la revendication 6 ou 7, caractérisé en ce que pour former la fonction de correction (K) on prévoit une résistance d'émetteur et on relie la base de la source de tension de référence à l'extrémité chaude directement de la résistance d'émetteur ou par un amplificateur opérationnel.

9. Régulateur de tension selon l'une des revendications 4 à 7, caractérisé en ce que pour former la fonction de correction (K) on associe en aval au moins l'une des deux résistances de mesure un diviseur de tension ou un diviseur de courant ou un amplificateur opérationnel (71, 72) agissant de façon correspondante.

10. Régulateur de tension selon la revendication 1 avec un condensateur comme intégrateur, caractérisé en ce que rapporté à la valeur instantanée identique de la tension de condensateur pour former la fonction de correction (K), son courant de charge est différent de son courant de décharge.

**11.** Régulateur de tension selon l'une des revendications précédentes, caractérisé en ce que rapporté à la valeur réelle de la tension de régulation du régulateur de tension par le courant passant par le champ d'excitation et la diode de roue libre (42), la fonction de correction (K) est plus fortement relevée que pendant le passage du courant à travers le champ d'excitation et le commutateur à semi-conducteur commandé (41).

**12.** Régulateur de tension selon la revendication 9, caractérisé en ce que la fonction de correction (K) rapportée à la valeur réelle de la tension de régulation du régulateur de tension est augmentée par le courant traversant le champ d'excitation et la diode de roue libre (42) d'un coefficient $1 < F \leqq 2,5$, plus fortement que pendant le passage du courant dans le champ d'excitation et dans le commutateur à semi-conducteur commandé (41).

**13.** Régulateur de tension selon l'une des revendications précédentes, caractérisé en ce qu'au moins l'un des deux termes de la fonction de correction (K) augmente à partir de la valeur zéro jusqu'à une valeur importante pour la durée de branchement relative (figure 4).

**14.** Régulateur de tension selon l'une des revendications précédentes, caractérisé en ce qu'au moins l'un des deux termes de la fonction de correction (K) est limité par la plage de commandes de l'amplificateur opérationnel (71, 72) en aval (figure 4u, v).

Fig. 1

Fig. 2

Fig. 3

Fig. 4

Fig. 5

Fig. 6

Fig. 7